# EUROPEAN PATENT APPLICATION

(11) **EP 1 348 485 A1**
(43) Date of publication of application: **01.10.2003**
(21) Application number: 02251406.1
(22) Date of filing: 28.02.2002
(51) Int. Cl.: B01L 3/00, B65B 61/06, B01L 9/06

(54) **Sample handling system and method**

(71) Applicant: The Automation Partnership (Cambridge) Limited, Royston, Hertfordshire SG8 5WY (GB)
(72) Inventor: Gedrych, Mark Richard, Cambridge CB3 0JD (GB); Toombs, Colin Michael, Orwell Royston Herts SG8 5QY (GB)
(74) Representative: Brunner, Michael John

(57) **Abstract**

A sample handling and storage system is provided for use with wells or micro-tubes of a source plate **(10)** having a plurality of wells or micro-tubes **(11)** open at one end and arranged in an array within the plate. The wells or micro-tubes **(11)** are integral with and depending from a support layer of the plate and each has an external connecting portion adjacent the open end, and is arranged to be frangible from the support layer. A filling station **(102)** enables aliquots of samples to be inserted into wells or micro-tubes in the source plate and a seal is placed across the wells or micro-tubes at a sealing station **(103)**. At a punching station **(104)** the wells or micro-tubes are punched from the source plate and loaded into a transport plate **(40)**. The wells or micro-tubes **(11)** may be placed in columns in chambers **(61)** in a storage rack **(60)** from which they may be individually removed and placed into a receiving plate **(70)**. A picking device **(50)** lifts individual wells or micro-tubes **(11)** from the storage rack chambers and a transport device **(105)** moves the source plate, the transport plate and the receiving plates around the system.

## Description

The present invention relates to sample handling systems and, more particularly, to a sample handling system for storage and processing of chemical or biological samples.

Large numbers of chemical or biological samples are required in product screening and development processes, particularly in pharmaceutical research and automated storage and handling systems such as our Asset and Select systems have been developed for use in such processes. Large numbers of so-called 'micro-tubes' each capable of holding around 1ml of a sample, usually in solution, are used in such processes. We and others have well-developed storage and processing systems for 96-way micro-tubes, ie systems in which up to 96 micro-tubes are capable of being grouped together and held in a supporting tray or plate for movement and storage within the processing system. Within a typical micro-tube store, multiple small aliquots of solution are taken from a bulk stock of solution in a micro-tube. As mentioned above, a micro-tube holds about 1ml of working volume, but as assays move to using lower sample volumes, the amount requested can in the order of 5-20µl. This means that there are about 500 quanta in the stock solution micro-tube.

It is generally accepted that stock solutions should be kept frozen in order to maximise compound stability and this means that the stock solution needs to be thawed before it can be accessed, and so during the lifetime of a stock solution it will go through multiple freeze-thaw cycles. It is recognised that these freeze-thaw cycles are detrimental to the compound, because they cause the solubilised compound to come out of solution. Multiple freeze-thaw cycles therefore exacerbate this problem. One solution to this problem is to create a large number of tubes with smaller aliquots, rather than a small number of tubes with larger aliquots, at the time of solubilisation. Doing this reduces the number of freeze-thaw cycles that each sample goes through. In the limit, if the tubes are created with the volume that will eventually be requested, then the tubes will go through a single freeze-thaw cycle. The tubes thus become "single-shot".

Clearly a single shot of about 10µl in a micro-tube that is capable of holding 1 ml is a waste of plastic, space and cost as far as the sample holder is concerned. Furthermore, the radius of the base of a conventional micro-tube does not make it possible to extract the last 10µl.

A more sensible solution would be to design a smaller tube suitable for aliquots of about 5-20µl, and such a tube would fit reasonably into a standard 384-well plate format, ie a plate having 384 tube positions in a 24 x 16 array.

From EP-A-0 904 841 it is known to provide a system handling 384-well plates in which individual sample tubes are supported in plates in such a way as to be capable of movement into or out of the plates from either side of the plate. The micro-tubes are individually moulded and are supplied pressed into a storage plate that holds 384 tubes having a working volume of 2µl to 40µl. After the solutions have been dispensed into the plate, the plate is heat-sealed with a conventional aluminium foil sheet. A punching unit then cuts the heat seal around each individual tube and the web is (manually) removed. At this point, the tubes exist as individual items each with their own heat seal. The tubes are then pressed firmly into the plate and sent to the store. The whole of the plate is stored. When it comes to individually picking tubes from the store, the required tube is pressed from the storage plate into a new receiving plate. This involves aligning the storage plate above the receiving plate and pressing the micro-tube from above, through the base of the storage plate and in at the top of the receiving plate. This alignment is performed on an X-Y stage that is located on a narrow-aisle gantry. The X-Y stage handles a single storage plate and receiving plate pair at a time.

According to the invention, there is provided a sample-container source plate having a plurality of wells or micro-tubes open at one end and arranged in an array within the plate, the wells or micro-tubes being integral with and depending from a support layer of the plate and each having an external connecting portion adjacent the open end, the wells or micro-tubes being arranged to be frangible from the support layer.

The external connecting portion may comprise a detent in the form, for example, of an annular or part-annular groove or an annular or part-annular ridge, or else the external connecting portion may comprises a plurality of deformable ribs extending longitudinally along the exterior of the micro-tube.

The invention also includes a transport plate for use with wells or micro-tubes separated from a source plate as defined above, the transport plate having a plurality of receptacles arranged in an array and each arranged to receive a well or micro-tube. Each of the receptacles may have a depth such as to enable the receipt therein of a plurality of micro-tubes .

The invention also includes a storage rack for storing a plurality of micro-tubes separated from a source plate as defined above, the storage rack having a plurality of elongate chambers arranged in an array, each chamber being arranged to store a plurality of wells or micro-tubes one above another.

The invention also includes a receiving plate for use with wells or micro-tubes separated from a source plate as defined above, the receiving plate having a plurality of apertures arranged in an array and each arranged to receive a well or micro-tube, the apertures each having a detent for engaging the corresponding detent of a respective well or micro-tube. The detent in each aperture may comprise an annular or part-annular ridge or an annular or part-annular groove.

The invention also includes a sample handling and storage system for use with wells or micro-tubes of a source plate as defined above, and including
a filling station at which aliquots of samples are arranged to be inserted into wells or micro-tubes in the source plate;
a sealing station at which a seal is placed across the wells or micro-tubes;
a punching station for separating the well or micro-tube from the source plate and loading the wells or micro-tubes into a transport plate as defined above;
a storage rack as defined above into which wells or micro-tubes may be placed in columns in the chambers and from which they may be individually removed;
a receiving plate as defined above into which individual wells or micro-tubes may be secured;
a picking device for lifting individual wells or micro-tubes from the storage rack chambers; and
a transport device or devices for moving the source plate, the transport plate and the receiving plates around the storage and handling system.

The picking device may include a pneumatic picking device.

The invention also includes a method of handling and storing samples in which
samples are placed into wells or micro-tubes in a source plate as defined above and are sealed therein;
the wells or micro-tubes are separated from the source plate by punching them therefrom and are placed into a transport plate; and
the wells or micro-tubes are removed from the transport plate and disposed in columns in elongate chambers in a storage rack.

Micro-tubes may be removed from the transport plate in groups. Preferably, selected wells or micro-tubes are subsequently removed from the storage rack and loaded on to a receiving plate for further processing.

The system thus enables individual micro-tubes to be stored in stacks as opposed to storing whole plates as in the prior art. This means significantly better packing density than mono-layers of plates. In our system, a fast vacuum gripper will pick the micro-tubes which also provides advantages in throughput in comparison with the prior art system referred to above, in which the tubes are picked by a relatively slow X-Y stage that is loaded with one storage plate at a time.

In the known system, the tubes are moulded individually whereas in the present design they are moulded in a plate containing 96 micro-tubes. Since the major cost of moulding is the time taken to perform the process, the labware of the system of the invention is likely to be cheaper. Furthermore, loading the individual tubes into the source plate of the prior art will also take time and this is avoided by the present invention.

One example of a system according to the present invention will now be described with reference to the accompanying drawings, in which:-
Figure 1 is an isometric view of a source plate and wells;
Figure 1A is a close-up view of a portion of the source plate;
Figure 1 B is a close-up view of the underside of the source plate;
Figure 2 shows a source plate from one side and in greater detail in section, disposed at a filling station;
Figure 3 shows a source plate from one side and in greater detail in section, after filling and sealing of the wells;
Figure 4 is an isometric view of a transport plate for containing wells or micro-tubes and moving them to a storage area of the system;
Figure 5 shows a punch unit for separating micro-tubes from a source plate in a storage area;
Figure 6 shows the punch unit in operation together with a source plate and a transport plate, in cross-section;
Figure 7 is a partially sectioned view of a storage rack for containing micro-tubes;
Figure 8 shows a receiving plate for receiving micro-tubes and transferring them for further processing with a number of micro-tubes located therein;
Figure 9 shows an isometric view of a micro-tube;
Figure 10 shows an isometric view of an alternative form of micro-tube;
Figure 11 is a diagram illustrating the steps involved in the process of creating a micro-tube and storing it;
Figure 12 is a diagram illustrating the steps involved in the process of subsequently using a micro-tube ;and
Figure 13 shows the general layout of the system.

The elements of the system are best described by running through the lifetime of a sample as it is processed or utilised.

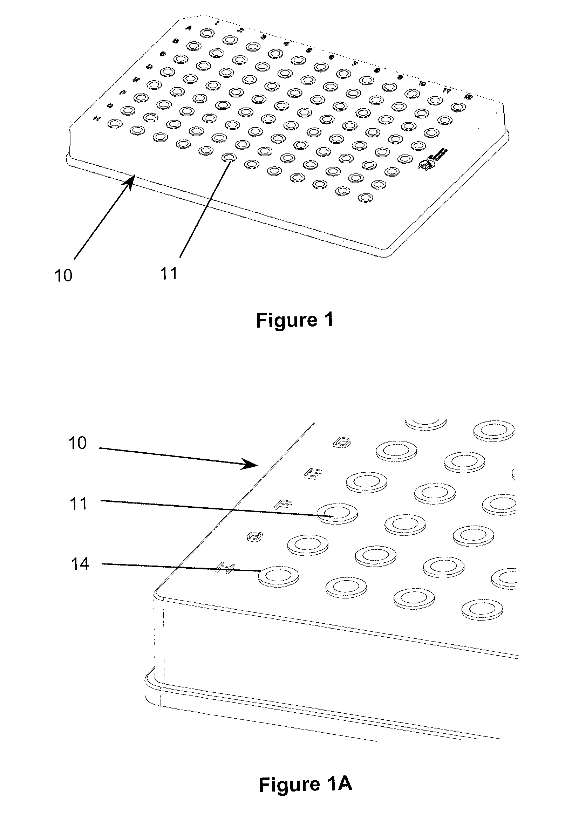

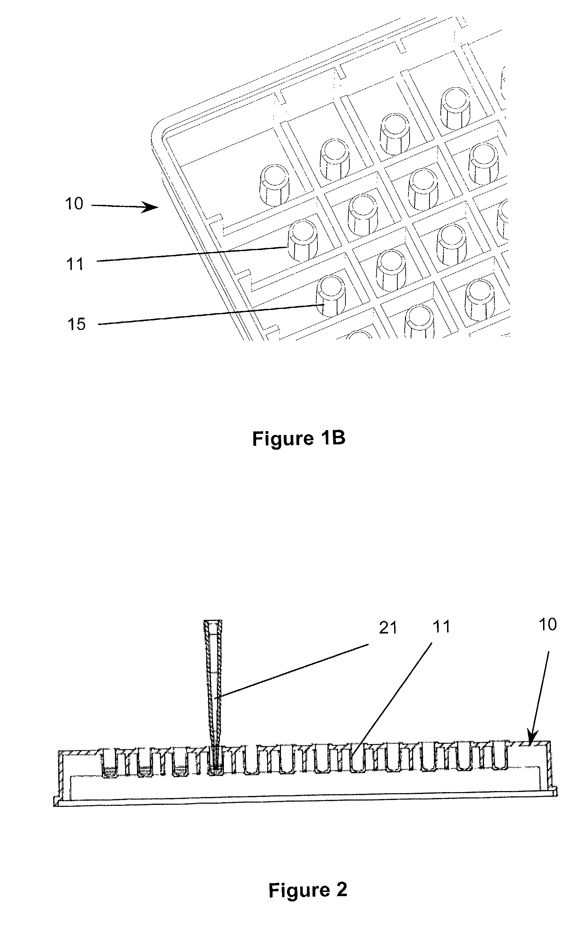

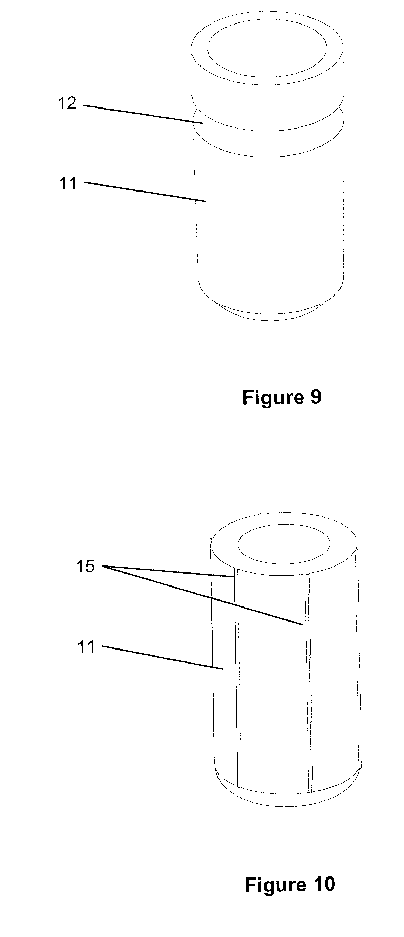

The first item of labware used in the process is a source plate 10 that can be seen in Figures 1 to 3, and this has the footprint and appearance of a standard 96-way SBS plate, but the individual wells or micro-tubes 11 are about the size of those in a 384-well plate. The source plate 10 is preferably formed of polypropylene and the individual wells or micro-tubes 11 are designed to carry a volume of between 20µl and 40µl, and, in one form (see Figure 10), have annular or part-annular grooves 12 providing a detent to enable location in a receiving plate (described later).

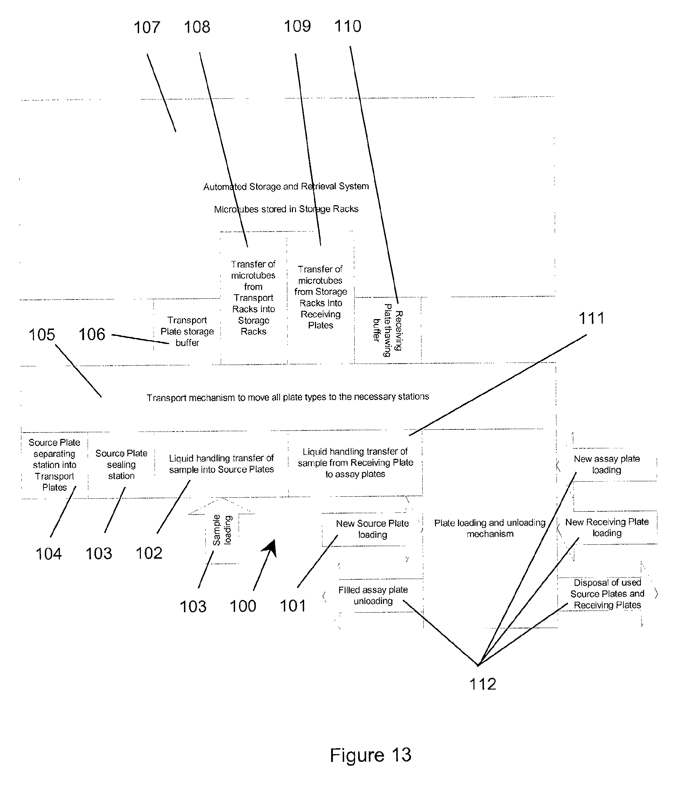

Source plates 10 are loaded into the system 100 at 101 (see Figure 13) and moved by a transport mechanism 105 and placed into solubilisation equipment at a filling station 102 into which fluid samples are loaded at 113, and small single-use aliquots of sample are dispensed into the wells or micro-tubes 11 by, for example, as shown, a pipetting system 21 (see Figure 2). If the aliquots are about 10µl each, then there should normally be sufficient solution from a typical solubilisation to create about 50 copies. In principle it does not matter whether the <n> copies are made into <n> wells of a single plate or into single wells of <n> plates. However, for speed of processing within the store, it will be much better to provide samples in multiple wells within a single plate.

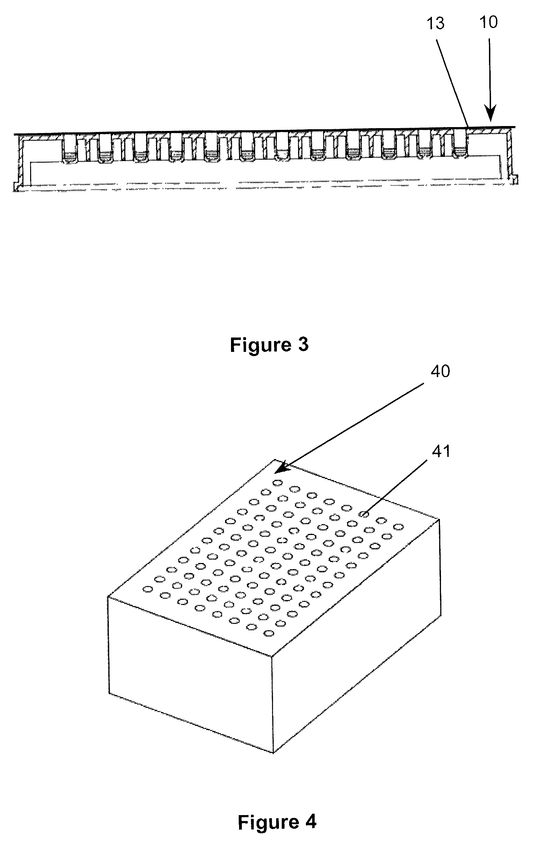

The respective source plate 10 and thus the associated wells 11 are then heat sealed at 103 (see also Figure 3) with an aluminium foil sheet 13 using a standard off-the-shelf heat sealer 22. In order to facilitate heat sealing, the source plate has slightly protruding chimneys 14 on each of the wells or micro-tubes 11.

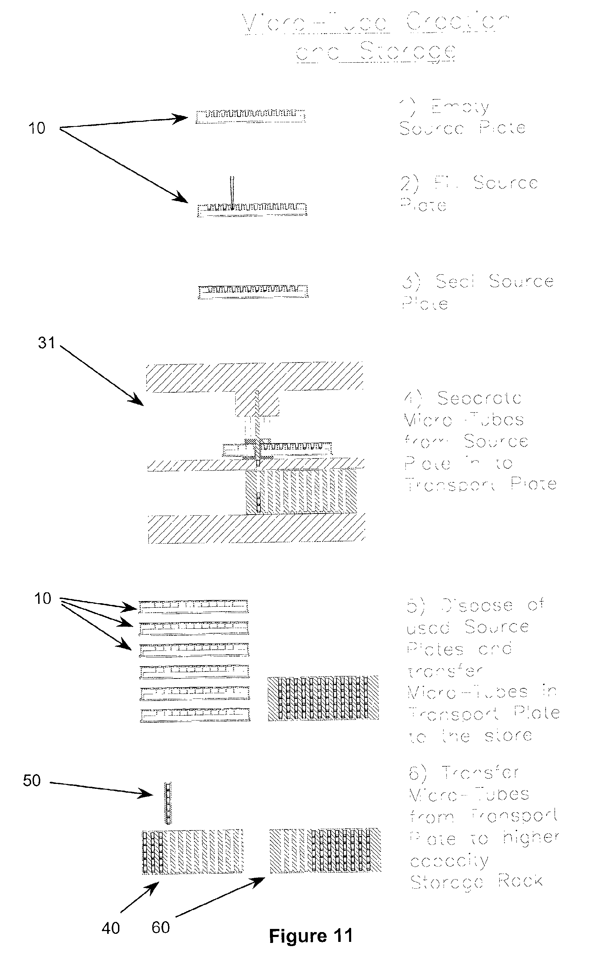

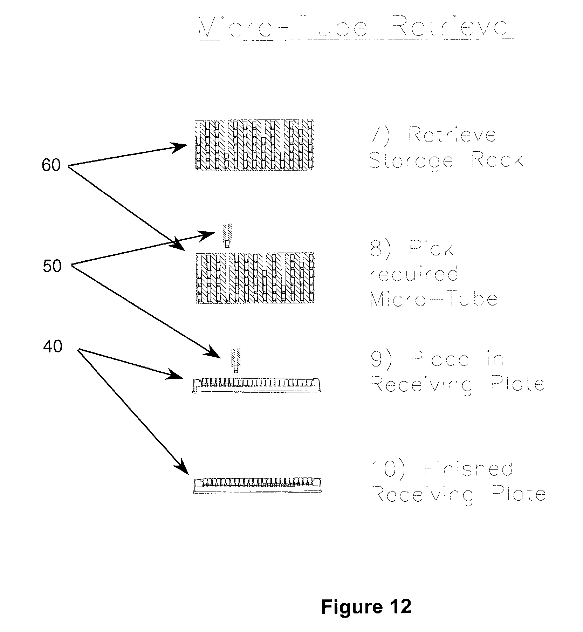

The source plate 10 is then fed into a separating station 104, where it is firstly taken to a punch unit 31 (see Figure 4) that punches the micro-tubes or wells 11 from the source plate 10 by cutting through the supporting material around each of the wells or micro-tubes 11 and pushes them directly into a 96-way transport plate 40 (see Figures 4 & 11) that loosely holds the individual micro-tubes 11 in columns in receptacles 41. The transport plate 40 functions to hold the micro-tubes 11 upright, in a manner that allows them to be easily picked up from the receptacles 41, one at a time or in groups from the receptacles, by a vacuum gripper 50 or the like (shown in Figures 11 & 12).

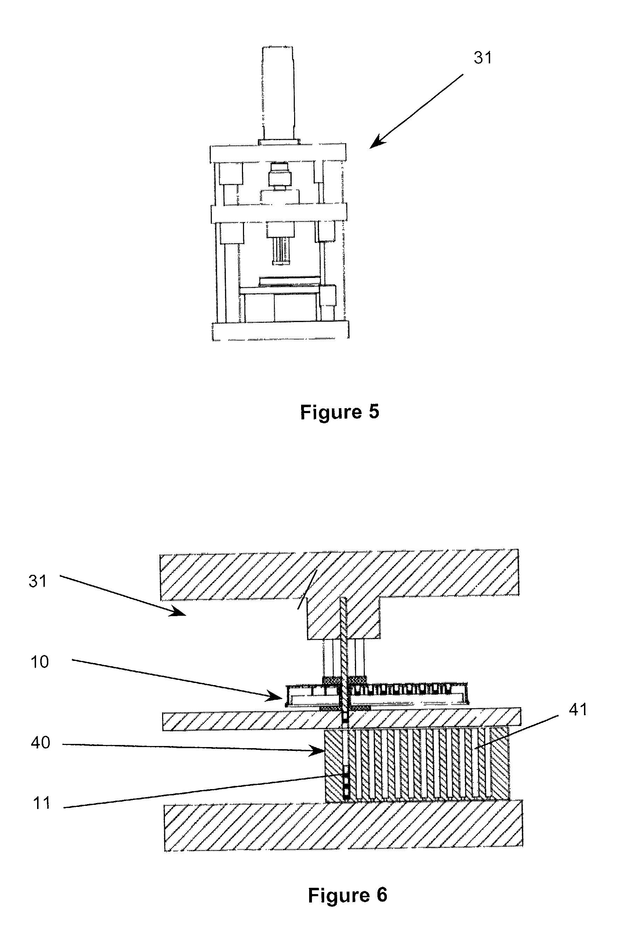

The transport plate 40, carrying the micro-tubes 11, is then taken, by a conveyor-like (or similar) transport mechanism 105, via a buffer 106 to a store 107 which includes an automated storage and retrieval system and in which the micro-tubes 11 are picked up by pick/place units 108 (shown diagrammatically in Figure 13) one-by-one or in groups and placed into one or more storage racks 60 (see Figure 5). The pick/place unit holds a micro-tube 11 by vacuum applied against the top of the aluminium foil seal 13 and deposits them in chambers 61 within the storage rack 60, each chamber 61 holding a column of micro-tubes 11 stacked one on top of the other in a manner similar to that of the transport rack.

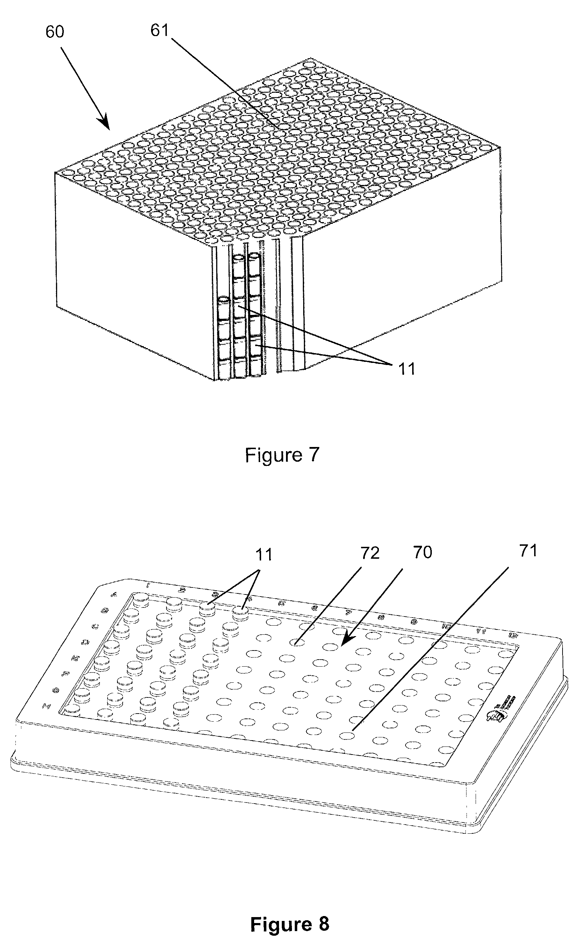

When micro-tubes 11 are required to be used in the particular process for which they are intended and thus are to be taken from the store 107, they are picked individually or in groups by pick/place units 109 (see Figure 13) from the chambers 61 in the storage racks 60 into a special receiving plate 70 (see Figure 8) and transferred via a buffer 110 to the transport mechanism 105. The receiving plate may be similar in form to the source plate, but has apertures 71 sized to receive the micro-tubes, each aperture having an internal edge 72 for mating with the annular/part-annular groove on a corresponding micro-tube. In another form of the micro-tube 11, instead of an annular groove 12, crushable ribs 15 are provided on the exterior of the micro-tube, extending parallel with the longitudinal axis of the micro-tube. The micro-tubes 11 are picked by vacuum and pushed into the receiving plate 70 until either they snap into place using the annular/part annular groove detent 12 or elase are securely seated by the crushable ribs 15. Receiving plates 70 may be available in 96-way and 384-way format and may be formed of, for example, polypropylene.

Thereafter, the receiving plate, carrying the required micro-tubes 11, is transported to an assay assembly station 111 (for example) where the micro-tubes will be used to prepare assay plates for high throughput screening. The assay plates are created by piercing the foil seal to access the micro-tube sample. A liquid handling pipette then dilutes the sample to the required concentration and transfers it to an assay plate. There may be a further dilution step in the assay plate or an intermediate plate may be used to create the required concentration. The assay plates (not shown) are loaded into and out of the system 100 by appropriate automated mechanisms 112.

Figures 11 & 12 illustrate diagrammatically the steps (described above) involved in the process of creating a micro-tube, filing it, storing it and subsequently retrieving it for use.

## Claims

1. A sample-container source plate having a plurality of wells or micro-tubes open at one end and arranged in an array within the plate, the wells or micro-tubes being integral with and depending from a support layer of the plate and each having an external connecting portion adjacent the open end, the wells or micro-tubes being arranged to be frangible from the support layer.

2. A source plate according to claim 1, wherein the external connecting portion comprises a detent.

3. A source plate according to claim 2, wherein the detent comprises an annular or part-annular groove.

4. A source plate according to claim 2, wherein the detents each comprise an annular or part-annular ridge.

5. A source plate according to claim 1, wherein the external connecting portion comprises a plurality of deformable ribs extending longitudinally along the exterior of the micro-tube.

6. A transport plate for use with wells or micro-tubes separated from a source plate according to claim 1, the transport plate having a plurality of receptacles arranged in an array and each arranged to receive a well or micro-tube.

7. A transport plate according to claim 6, wherein each of the receptacles has a depth such as to enable the receipt therein of a plurality of micro-tubes .

8. A storage rack for storing a plurality of micro-tubes separated from a source plate according to claim 1, the storage rack having a plurality of elongate chambers arranged in an array, each chamber being arranged to store a plurality of wells or micro-tubes one above another.

9. A receiving plate for use with wells or micro-tubes separated from a source plate according to claim 1, the receiving plate having a plurality of apertures arranged in an array and each arranged to receive a well or micro-tube, the apertures each having a detent for engaging the corresponding detent of a respective well or micro-tube.

10. A receiving plate according to claim 9, wherein the detent in each aperture comprises an annular or part-annular ridge.

11. A receiving plate according to claim 9, wherein the detent in each aperture comprises an annular or part-annular groove.

12. A sample handling and storage system for use with wells or micro-tubes of a source plate according to claim 1, and including
a filling station at which aliquots of samples are arranged to be inserted into wells or micro-tubes in the source plate;
a sealing station at which a seal is placed across the wells or micro-tubes;
a punching station for separating the well or micro-tube from the source plate and loading the wells or micro-tubes into a transport plate according to claim 6;
a storage rack according to claim 8 into which wells or micro-tubes may be placed in columns in the chambers and from which they may be individually removed;
a receiving plate according to claim 9 into which individual wells or micro-tubes may be secured;
a picking device for lifting individual wells or micro-tubes from the storage rack chambers; and
a transport device or devices for moving the source plate, the transport plate and the receiving plates around the storage and handling system.

13. A sample handling and storage system according to claim 12, wherein the picking device includes a pneumatic picking device.

14. A method of handling and storing samples in which
samples are placed into wells or micro-tubes in a source plate according to claim 1 and are sealed therein;
the wells or micro-tubes are separated from the source plate by punching them therefrom and are placed into a transport plate; and
the wells or micro-tubes are removed from the transport plate and disposed in columns in elongate chambers in a storage rack.

15. A method according to claim 14, wherein micro-tubes are removed from the transport plate in groups

16. A method according to claim 14 or claim 15, in which selected wells or micro-tubes are subsequently removed from the storage rack and loaded on to a receiving plate for further processing.
